# EUROPÄISCHE PATENTSCHRIFT

(11) **EP 2 129 939 B1**
(45) Veröffentlichungstag und Bekanntmachung des Hinweises auf die Patenterteilung: **02.06.2010**
(21) Anmeldenummer: 08735480.9
(22) Anmeldetag: 26.03.2008
(51) Int. Cl.: F16H 57/02

(54) **ANORDNUNG EINES ZAHNRADES AUF EINER HAUPTWELLE EINES GETRIEBES**
ARRANGEMENT OF A GEAR ON AN OUTPUT SHAFT OF A TRANSMISSION
AGENCEMENT D'UNE ROUE DENTEE SUR UN ARBRE PRINCIPAL D'UN ENGRENAGE

(30) Priorität: 03.04.2007 DE 102007015998
(43) Veröffentlichungstag der Anmeldung: 09.12.2009
(73) Patentinhaber: ZF Friedrichshafen AG, 88038 Friedrichshafen (DE)
(72) Erfinder: BADER, Josef, 88045 Friedrichshafen (DE); RENNER, Stefan, 78351 Bodman-Ludwigshafen (DE)
(86) Internationale Anmeldenummer: PCT/EP2008/053542
(87) Internationale Veröffentlichungsnummer: WO 2008/119703

(56) Entgegenhaltungen:
- DE-A1- 2 447 582
- DE-A1- 19 630 804
- DE-A1- 19 734 980
- DE-A1- 19 927 080
- DE-A1-102004 010 270
- DE-A1-102004 057 126

## Beschreibung

Die Erfindung betrifft eine Anordnung eines Zahnrades auf einer Hauptwelle eines Getriebes mit mindestens zwei Vorgelegewellen nach dem Oberbegriff des Patentanspruches 1.

Es ist bekannt, dass bei Getrieben mit einer Hauptwelle und mindestens zwei Vorgelegewellen ein Lastausgleich der auf der Hauptwelle angeordneten Zahnräder, auch Summenräder genannt, in radialer Richtung erfolgt. Die Summenräder, welche in Verzahnungen der Vorgelegewellen eingreifen, sind radial beweglich gegenüber der Hauptwelle angeordnet und werden durch die Verzahnungen der Vorgelegewellen radial geführt bzw. zentriert. Eine axiale Führung der Summenräder, welche in einem Schaltgetriebe als Gangräder ausgebildet sind, erfolgt durch seitlich angeordnete Anlaufscheiben.

Eine derartige Anordnung von Summenrädern eines Getriebes mit einer Hauptwelle und zwei Vorgelegewellen wurde durch die gattungsgemäße DE 10 2004 010 270 A1 der Anmelderin bekannt. Auf einer Hauptwelle sind zwei als Losräder ausgebildete Summenräder angeordnet, welche mit Verzahnungen von zwei Vorgelegewellen kämmen und mit radialem Spiel gegenüber der Hauptwelle angeordnet sind.

Durch die DE 196 30 804 A1 der Anmelderin wurde eine ähnlich Anordnung eines Zahnrades auf einer schwimmend im Getriebe angeordneten Hauptwelle bekannt, wobei das Zahnrad mit mindestens zwei Vorgelegewellen kämmt und gegenüber der Hauptwelle ein radiales Spiel aufweist.

Eine weitere Anordnung eines Summenrades, auch Hauptwellenrad genannt, auf einer Hauptwelle wurde durch die DE 10 2004 057 126 A1 der Anmelderin bekannt. Dort ist zwischen einer axialen Anlaufscheibe und dem Zahnrad ein Federelement in Form einer Tellerfeder angeordnet, um das Axialspiel des Hauptwellenrades zu reduzieren.

Nachteilig bei den bekannten Anordnungen von Summenrädern auf der Hauptwelle ist, dass infolge der radialen Beweglichkeit und einer äußeren Schwingungsanregung der Räder unerwünschte Geräusche (so genannte Rasselgeräusche) entstehen.

Es ist Aufgabe der vorliegenden Erfindung, eine Anordnung der eingangs genannten Art derart zu verbessern, dass eine unerwünschte Geräuschbildung vermieden oder zumindest reduziert wird.

Die Lösung dieser Aufgabe ergibt sich aus den Merkmalen des Patentanspruches 1. Erfindungsgemäß ist zwischen dem Zahnrad und der Hauptwelle und/oder dem Zahnrad und den Vorgelegewellen ein elastisches Element angeordnet, welches die radiale Beweglichkeit des Zahnrades einschränkt, behindert oder dämpft. Damit werden die unerwünschten Geräusche vermieden. Dennoch kann aufgrund des elastischen Elementes zwischen Zahnrad und Hauptwelle oder Zahnrad und Vorgelegewellen ein Lastausgleich erfolgen.

Nach einer vorteilhaften Ausgestaltung der Erfindung ist das elastische Element als Federring ausgebildet, welcher in radialer Richtung elastisch verformbar ist und somit der Radialbewegung des Zahnrades bzw. der Hauptwelle eine elastische Federkraft entgegensetzt. Ein derartiger Federring kann kostengünstig und einfach montiert werden. Vorteilhafterweise kann zwischen dem Federring und dem Zahnrad ein Gleitring angeordnet sein, um die Reibung zu reduzieren.

Nach einer weiteren bevorzugten Ausführungsform kann am Zahnrad eine Scheibe mit radialer Führung vorgesehen sein, die in einer Nut der Hauptwelle geführt und durch einen radial elastischen Federring belastet wird.

Nach einer bevorzugten Ausführungsform ist das zwischen dem Zahnrad und der Hauptwelle angeordnete elastische Element einstückig ausgebildet. Ebenso ist es denkbar, dass das zwischen dem Zahnrad und der Hauptwelle angeordnete elastische Element mehrstückig ausgebildet ist.

Nach einer weiteren vorteilhaften Ausgestaltung ist das elastische Element zwischen dem Umfang des Zahnrades und der Vorgelegewelle angeordnet und beispielsweise einstückig ausgebildet. Vorteilhafterweise ist das elastische Element neben der Au ßenverzahnung des Zahnrades angeordnet. Damit werden die Radialbeweglichkeit des Zahnrades eingeschränkt und Geräusche vermieden.

Nach einer vorteilhaften Ausgestaltung der Erfindung ist das elastische Element als Elastomer ausgebildet.

Ausführungsbeispiele der Erfindung sind in der Zeichnung dargestellt und werden im Folgenden näher beschrieben.

Es zeigen:
- Fig. 1: einen Ausschnitt aus einem Schaltgetriebe mit zwei erfindungsgemäß auf einer Hauptwelle angeordneten Summenrädern und
- Fig. 2: ein weiteres Ausführungsbeispiel der Erfindung mit einem zwischen Zahnrad und Vorgelegewelle angeordneten elastischen Element.

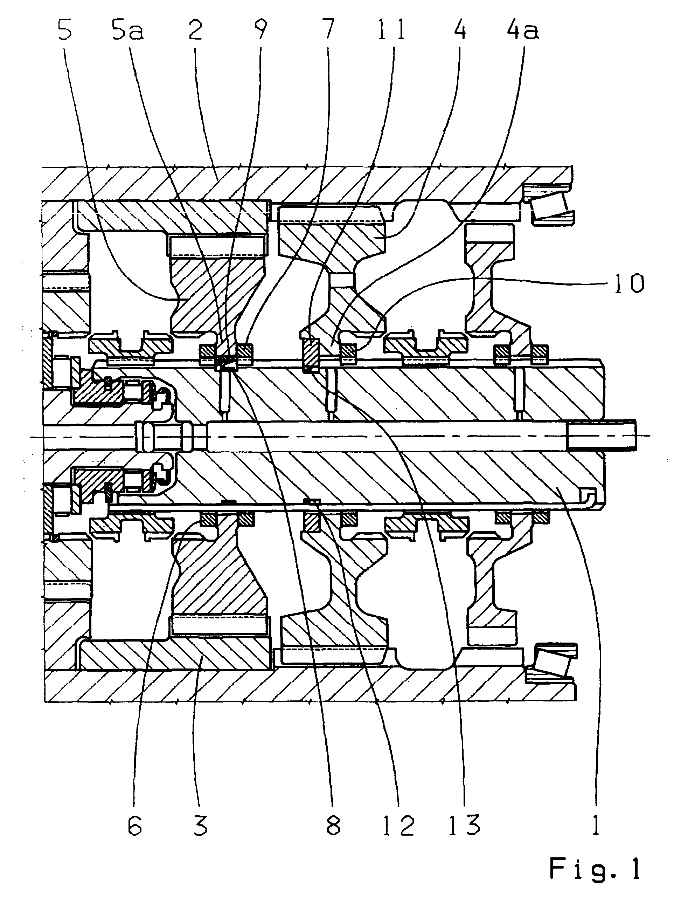

**Fig. 1** zeigt einen Ausschnitt aus einem Schaltgetriebe mit einer Hauptwelle 1 und zwei Vorgelegewellen 2, 3, die lediglich angedeutet sind. Auf der Hauptwelle 1 sind zwei Gangräder (Zahnräder) 4, 5 für den ersten und den zweiten Gang des Schaltgetriebes angeordnet. Die Gangräder 4, 5 kämmen jeweils mit den Vorgelegewellen 2, 3. Die Gangräder 4, 5 sind als Losräder ausgebildet und werden auch als Summenräder bezeichnet; sie sind gegenüber der Hauptwelle 1 aus Gründen eines Lastausgleiches radial beweglich angeordnet, d. h. zwischen den Summenrädern 4, 5 und der Hauptwelle 1 besteht ein radiales Spiel. Das Zahnrad 5 weist einen Nabenbereich 5a auf, welcher beiderseits durch Anlaufscheiben 6, 7 geführt ist. Zwischen dem Nabenbereich 5a und der Hauptwelle 1 ist ein elastisches Element, ausgebildet als Federring 8, angeordnet. Zusätzlich ist zwischen dem Federring 8 und dem Nabenbereich 5a ein Gleitring 9 angeordnet. Durch den Federring 8 in Verbindung mit dem Gleitring 9 wird die Radialbewegung zwischen Zahnrad 5 und Hauptwelle 1 durch die elastische Rückstellkraft des Federringes 8 erschwert und eingeschränkt. Damit können unerwünschte Geräusche, angeregt durch äußere Schwingungen, vermieden werden.

Für das Zahnrad 4 ist ein zweites Ausführungsbeispiel der Erfindung dargestellt. Das Zahnrad 4, auch Summenrad oder Gangrad genannt, kämmt mit den Vorgelegewellen 2, 3 und wird durch diese radial geführt. Gegenüber der Hauptwelle 1 ist ebenfalls ein radiales Spiel zum Lastausgleich vorgesehen. Das Zahnrad 4 weist einen Nabenbereich 4a auf, auf dessen in der Zeichnung rechts gelegener Seite eine Anlaufscheibe 10 angeordnet ist. Auf der in der Zeichnung links gelegenen Seite weist das Zahnrad 4 eine Scheibe 11 mit radialer Führung auf, d. h. die Scheibe 11 ist radial im Zahnrad 4 aufgenommen. Die Hauptwelle 1 weist im Bereich der Scheibe 11 eine Ringnut 12 auf, in welcher ein elastisches Element, ausgebildet als Federring 13, angeordnet und axial geführt ist. Eine radiale Bewegung des Zahnrades 4 nach innen wird somit über die Scheibe 11 und den Federring 13 gegenüber der Hauptwelle 1 abgefedert.

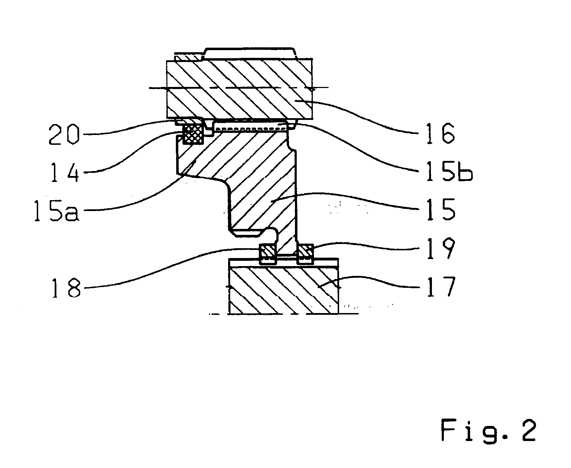

**Fig. 2** zeigt ein weiteres Ausführungsbeispiel der Erfindung, wobei ein elastisches Element 14 zwischen einem Zahnrad 15 und einer Vorgelegewelle 16 angeordnet ist. Das ebenfalls als Summen- oder Gangrad ausgebildete Zahnrad 15 ist gegenüber einer Hauptwelle 17 radial beweglich angeordnet und durch zwei Anlaufscheiben 18, 19 geführt. Das Zahnrad 15 steht mit der Vorgelegewelle 16 sowie einer weiteren, nicht dargestellten Vorgelegewelle in Zahneingriff und wird durch die Vorgelegewellen radial geführt. Das elastische Element 14 ist in einem Vorsprung 15a des Zahnrades 15 neben dessen Verzahnung 15b angeordnet und stützt sich über einen Gleitring 20 auf der Vorgelegewelle 16 ab. Eine Radialbewegung des Zahnrades 15 wird somit über das elastische Element 14 in Verbindung mit dem Gleitring 20 gegenüber der Vorgelegewelle 16 abgefedert.

Ergänzend zu den dargestellten Ausführungsbeispielen ist es auch möglich und im Rahmen der Erfindung liegend, dass elastische Elemente sowohl zwischen Zahnrad und Vorgelegewellen als auch zwischen Zahnrad und Hauptwelle angeordnet sind.

### Bezugszeichen

- 1: Hauptwelle
- 2: Erste Vorlegewelle
- 3: Zweite Vorgelegewelle
- 4: Gangrad (1. Gang)
- 4a: Nabenbereich
- 5: Gangrad (2. Gang)
- 5a: Nabenbereich
- 6: Anlaufscheibe
- 7: Anlaufscheibe
- 8: Federring
- 9: Gleitring
- 10: Anlaufscheibe
- 11: Scheibe mit radialer Führung
- 12: Ringnut
- 13: Federring
- 14: Elastisches Element
- 15: Zahnrad
- 15a: Vorsprung
- 15b: Verzahnung
- 16: Vorgelegewelle
- 17: Hauptwelle
- 18: Anlaufscheibe
- 19: Anlaufscheibe
- 20: Gleitring

## Patentansprüche

1. Anordnung eines Zahnrades (4, 5, 15) auf einer Hauptwelle (1, 17) eines Getriebes mit mindestens zwei Vorgelegewellen (2, 3, 16), wobei das Zahnrad (4, 5, 15) als Summen- oder Gangrad ausgebildet, mit den Vorgelegewellen (2, 3, 16) in Zahneingriff steht und radial beweglich zwischen den Vorgelegewellen (2, 3, 16) angeordnet ist, **dadurch gekennzeichnet, dass** zwischen dem Zahnrad (4, 5) und der Hauptwelle (1) und/oder zwischen dem Zahnrad (15) und der Vorgelegewelle (16) ein elastisches Element (8, 13, 14) angeordnet ist.

2. Anordnung nach Anspruch 1, **dadurch gekennzeichnet, dass** das elastische Element (8, 13, 14) als Federring ausgebildet ist, welcher in radialer Richtung elastisch verformbar ist.

3. Anordnung nach Anspruch 1, **dadurch gekennzeichnet, dass** das elastische Element (8, 13, 14) als Elastomer ausgebildet ist.

4. Anordnung nach wenigstens einem der Ansprüche 1 bis 3, **dadurch gekennzeichnet, dass** das Zahnrad (5) einen Nabenbereich (5a) aufweist, der zwischen zwei Anlaufscheiben (6, 7) geführt ist, und dass das elastische Element (8) zwischen dem Nabenbereich (5a) und der Hauptwelle (1) angeordnet ist.

5. Anordnung nach Anspruch 4, **dadurch gekennzeichnet, dass** zwischen dem Nabenbereich (5a) und dem elastischen Element (8) ein Gleitring (9) angeordnet ist.

6. Anordnung nach wenigstens einem der Ansprüche 1 bis 3, **dadurch gekennzeichnet, dass** Zahnrad (4) auf der Hauptwelle (1) mittels einer Scheibe (11) mit radialer Führung im Zahnrad (4) angeordnet und dass das elastische Element (13) zwischen der Scheibe (11) und der Hauptwelle (1) angeordnet ist.

7. Anordnung nach Anspruch 6, **dadurch gekennzeichnet, dass** die Hauptwelle (1) eine Ringnut (12) aufweist, in welcher das elastische Element (13) angeordnet ist.

8. Anordnung nach wenigstens einem der Ansprüche 1 bis 3, **dadurch gekennzeichnet, dass** das Zahnrad (15) eine Außenverzahnung (15b) und einen Vorsprung (15a) aufweist und dass das elastische Element (14) in dem Vorsprung (15a) neben der Außenverzahnung (15b) angeordnet ist.

9. Anordnung nach Anspruch 8, **dadurch gekennzeichnet, dass** zwischen dem elastischen Element (14) und der Vorgelegewelle (16) ein Gleitring (20) angeordnet ist.

10. Anordnung nach wenigstens einem der vorangegangenen Ansprüche, **dadurch gekennzeichnet, dass** das elastische Element (8, 13, 14) einstückig ausgebildet ist.

## Claims

1. Arrangement of a gearwheel (4, 5, 15) on a main shaft (1, 17) of a transmission having at least two countershafts (2, 3, 16), the gearwheel (4, 5, 15) being designed as a sum wheel or as a gear selection wheel, being in meshed engagement with a countershaft (2, 3, 16) and being arranged radially movably between the countershafts (2, 3, 16), **characterized in that** an elastic element (8, 13, 14) is arranged between the gearwheel (4, 5) and the main shaft (1) and/or between the gearwheel (15) and the countershaft (16).

2. Arrangement according to Claim 1, **characterized in that** the elastic element (8, 13, 14) is designed as a spring ring which is elastically deformable in the radial direction.

3. Arrangement according to Claim 1, **characterized in that** the elastic element (8, 13, 14) is formed as elastomer.

4. Arrangement according to at least one of Claims 1 to 3, **characterized in that** the gearwheel (5) has a hub region (5a) which is guided between two run-on discs (6, 7), and **in that** the elastic element (8) is arranged between the hub region (5a) and the main shaft (1).

5. Arrangement according to Claim 4, **characterized in that** a sliding ring (9) is arranged between the hub region (5a) and the elastic element (8).

6. Arrangement according to at least one of Claims 1 to 3, **characterized in that** the gearwheel (4) is arranged on the main shaft (1) by means of a disc (11) having radial guidance in the gearwheel (4), and **in that** the elastic element (13) is arranged between the disc (11) and the main shaft (1).

7. Arrangement according to Claim 6, **characterized in that** the main shaft (1) has an annular groove (12) in which the elastic element (13) is arranged.

8. Arrangement according to at least one of Claims 1 to 3, **characterized in that** the gearwheel (15) has an external toothing (15b) and a projection (15a), and **in that** the elastic element (14) is arranged, next to the external toothing (15b), in the projection (15a).

9. Arrangement according to Claim 8, **characterized in that** a sliding ring (20) is arranged between the elastic element (14) and the countershaft (16).

10. Arrangement according to at least one of the preceding claims, **characterized in that** the elastic element (8, 13, 14) is formed in one piece.

## Revendications

1. Agencement d'une roue dentée (4, 5, 15) sur un arbre principal (1, 17) d'une transmission comprenant au moins deux arbres intermédiaires (2, 3, 16), la roue dentée (4, 5, 15) étant réalisée sous forme de pignon totalisateur ou pignon de vitesse, étant en prise d'engrènement avec les arbres intermédiaires (2, 3, 16) et étant disposée de manière radialement mobile entre les arbres intermédiaires (2, 3, 16), **caractérisé en ce qu'**un élément élastique (8, 13, 14) est disposé entre la roue dentée (4, 5) et l'arbre principal (1) et/ou entre la roue dentée (15) et l'arbre intermédiaire (16).

2. Agencement selon la revendication 1, **caractérisé en ce que** l'élément élastique (8, 13, 14) est réalisé sous forme de bague élastique qui peut être déformée élastiquement dans la direction radiale.

3. Agencement selon la revendication 1, **caractérisé en ce que** l'élément élastique (8, 13, 14) est réalisé sous forme d'élastomère.

4. Agencement selon au moins l'une quelconque des revendications 1 à 3, **caractérisé en ce que** la roue dentée (5) présente une région de moyeu (5a) qui est guidée entre deux disques de butée (6, 7) et **en ce que** l'élément élastique (8) est disposé entre la région de moyeu (5a) et l'arbre principal (1).

5. Agencement selon la revendication 4, **caractérisé en ce qu'**une bague de glissement (9) est disposée entre la région de moyeu (5a) et l'élément élastique (8).

6. Agencement selon au moins l'une quelconque des revendications 1 à 3, **caractérisé en ce que** la roue dentée (4) est disposée sur l'arbre principal (1) au moyen d'un disque (11) avec un guidage radial dans la roue dentée (4), et **en ce que** l'élément élastique (13) est disposé entre le disque (11) et l'arbre principal (1).

7. Agencement selon la revendication 6, **caractérisé en ce que** l'arbre principal (1) présente une rainure annulaire (12) dans laquelle est disposé l'élément élastique (13).

8. Agencement selon au moins l'une quelconque des revendications 1 à 3, **caractérisé en ce que** la roue dentée (15) présente une denture extérieure (15b) et une saillie (15a), et **en ce que** l'élément élastique (14) est disposé dans la saillie (15a) à côté de la denture extérieure (15b).

9. Agencement selon la revendication 8, **caractérisé en ce qu'**une bague de glissement (20) est disposée entre l'élément élastique (14) et l'arbre intermédiaire (16).

10. Agencement selon au moins l'une quelconque des revendications précédentes, **caractérisé en ce que** l'élément élastique (8, 13, 14) est réalisé d'une seule pièce.
